(19)

Europäisches Patentamt
European Patent Office
Office européen des brevets

(11)  **EP 4 116 912 A1**

(12)  **EUROPEAN PATENT APPLICATION**
published in accordance with Art. 153(4) EPC

(43) Date of publication:
**11.01.2023  Bulletin 2023/02**

(21) Application number: **21764540.7**

(22) Date of filing: **24.02.2021**

(51) International Patent Classification (IPC):
**G06Q 30/06** *(2012.01)*

(52) Cooperative Patent Classification (CPC):
**G06Q 30/06**

(86) International application number:
**PCT/CN2021/077669**

(87) International publication number:
**WO 2021/175137 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **02.03.2020  CN 202010137487**

(71) Applicants:
• **Beijing Wodong Tianjun Information Technology
Co.,
Ltd.
100176 Beijing (CN)**
• **Beijing Jingdong Century Trading Co., Ltd.
Beijing 100176 (CN)**

(72) Inventors:
• **ZHANG, Wei
Beijing 100176 (CN)**
• **SHANG, Xin
Beijing 100176 (CN)**

• **ZHU, Guangming
Beijing 100176 (CN)**
• **YANG, Fan
Beijing 100176 (CN)**
• **SI, Xiaoting
Beijing 100176 (CN)**
• **LIU, Hongguang
Beijing 100176 (CN)**
• **WANG, Weiran
Beijing 100176 (CN)**
• **LAN, Jiang
Beijing 100176 (CN)**
• **HUANG, Yijun
Beijing 100176 (CN)**
• **JIANG, Hongkai
Beijing 100176 (CN)**
• **QIAN, Xuedi
Beijing 100176 (CN)**

(74) Representative: **Wynne-Jones IP Limited
Southgate House
Southgate Street
Gloucester, Gloucestershire GL1 1UB (GB)**

(54)  **ITEM RECOMMENDATION SYSTEM, METHOD FOR ITEM RECOMMENDATION, COMPUTER SYSTEM, AND MEDIUM**

(57)    A system (200) of recommending an item, a method of recommending an item by a system of recommending an item, a computer system, and a computer-readable storage medium are provided. The system (200) includes: an item expansion module (210) configured to expand a content input by a user in response to the content input by the user, so as to generate an item set of interest to the user, wherein the item set includes one or more items; a price radar module (220) configured to monitor a discount information of the item in the item set; and a price monitoring module (230) configured to calculate an actual price of the item based on the discount information of the item monitored by the price radar module (220), maintain a price change record of the item in the item set, and determine whether to push a prompt information to the user or not according to the calculated actual price of the item and the price change record.

EP 4 116 912 A1

FIG. 2

**Description**

This application claims priority to the Chinese Patent Application No. 202010137487.3, entitled "system of recommending item, method of recommending item, computer system, and medium" and filed on March 2, 2020, the content of which are incorporated herein by reference in its entirety.

TECHNICAL FIELD

The present disclosure relates to a field of Internet technology, in particular to a system of recommending an item, a method of recommending an item by a system of recommending an item, a computer system, and a computer-readable storage medium.

BACKGROUND

With a rapid development of e-commerce technology, consumers are more and more accustomed to online transactions. Every consumer wants to purchase an item at the most favorable price in the most convenient way. At present, offline supermarkets and online e-commerce platforms are engaged in business of a large number of items, which may bring a large number of promotional offers. Promotional offers may change daily, various promotion types and rules may overlap and limit each other, and item prices may change every day. Accordingly, in real life, before purchasing an item, especially an expensive item, a consumer often checks whether a favorite item has been reduced in price and whether a price reduction has reached a satisfactory level every day for a period of time.

With a development of technology, in a related art, the consumer may add a favorite or desired item to favorites, and a trading platform may timely inform the consumer of a promotional offer for the item in favorites.

However, in a process of achieving a concept of the present disclosure, the inventors found that at least the following problems exist in the related art. At present, various categories of items may have various prices, and a variety of promotion types and coupons may be provided with complicated rules. To purchase a category of item, a user needs to manually add most items in the category to favorites and further pay attention to a discount information of most items in the category, which results in a poor user experience in transaction.

SUMMARY

To this end, the present disclosure relates to a system of recommending an item, a method of recommending an item by a system of recommending an item, a computer system, and a computer-readable storage medium.

An aspect of the present disclosure provides a system of recommending an item, including: an item expansion module configured to expand a content input by a user in response to the content input by the user, so as to generate an item set of interest to the user, wherein the item set includes one or more items; a price radar module configured to monitor a discount information of the item in the item set; and a price monitoring module configured to calculate an actual price of the item based on the discount information of the item monitored by the price radar module, maintain a price change record of the item in the item set, and determine whether to push a prompt information to the user or not according to the calculated actual price of the item and the price change record.

According to the embodiments of the present disclosure, the item expansion module includes: a brand similarity calculation module configured to expand an item of concern input by the user in response to the item of concern input by the user; and a category correlation calculation module configured to analyze a category input by the user, mine a potential transaction scenario for the category, and determine an item involved in the potential transaction scenario, in response to the category input by the user; wherein an item obtained after expanding by the brand similarity calculation module and the item determined by the category correlation calculation module form the item set.

According to the embodiments of the present disclosure, the brand similarity calculation module includes a brand graph construction unit configured to: calculate a brand distance between any two brands, wherein the brand distance between the two brands is defined as a ratio of a number of one or more same categories covered by the two brands to a total number of categories covered by the two brands; compare the brand distance between the two brands with a first preset threshold, and determine two brands with a brand distance greater than the first preset threshold as correlated brands; build a correlation for the correlated brands in a brand graph; and visually display the brand graph.

According to the embodiments of the present disclosure, the brand similarity calculation module further includes a brand grade division unit configured to: calculate an average price overflow ratio of each brand by an equation of:

$$average\ price\ overflow\ ratio = \frac{average\ price\ of\ item\ in\ category\ 1\ of\ the\ brand}{average\ price\ of\ item\ in\ category\ 1\ of\ all\ brands} +$$

$$\cdots + \frac{average\ price\ of\ item\ in\ category\ n\ of\ the\ brand}{average\ price\ of\ item\ in\ category\ n\ of\ all\ brands},$$

determine a probability of the average price overflow ratio of the brand belonging to each grade through fuzzy mathematics; calculate a final probability of the brand according to the probability of the average price overflow ratio of the brand belonging to each grade and a weight assigned to each grade; and determine a grade for the brand according to the final probability of the brand.

According to the embodiments of the present disclosure, the brand graph construction unit is further configured to: construct a brand graph for each grade of brand according to the grade of each brand after the grade of each brand is determined by the brand grade division unit.

According to the embodiments of the present disclosure, the brand similarity calculation module further includes a brand connection determination unit configured to: multiply the final probabilities of any two brands to calculate a probability of the two brands being correlated; compare the probability of the two brands being correlated with a second preset threshold to determine whether the two brands are correlated or not; determine two brands with a probability of being correlated greater than or equal to the second preset threshold as correlated brands; and build a correlation for the correlated brands in the brand graph.

According to the embodiments of the present disclosure, the brand similarity calculation module further includes a similar item selection unit configured to: expand the content input by the user based on the brand graph, so as to obtain an item with a brand correlated with the content input by the user.

According to the embodiments of the present disclosure, the category correlation calculation module includes: a category scenario mining unit configured to construct a correlation-between-categories-in-one-purchase graph by analyzing a historical order within a preset period of time, and mine one or more consumption scenarios according to the correlation-between-categories-in-one-purchase graph; and an item scenario query unit configured to query a category correlated with the content input by the user from the correlation-between-categories-in-one-purchase graph according to the content input by the user.

According to the embodiments of the present disclosure, in determining whether to push a prompt information to the user or not according to the calculated actual price of the item and the price change record, the price monitoring module is further configured to: compare the calculated actual price of the item with a historical price in the price change record; and push the prompt information to the user, or notify the price radar module to push the discount information to the user, in response to the calculated actual price of the item being less than the historical price in the price change record.

Another aspect of the present disclosure provides a method of recommending an item by a system of recommending an item, wherein the system of recommending the item includes an item expansion module, a price radar module and a price monitoring module, and the method includes: expanding, by the item expansion module, a content input by a user in response to the content input by the user, so as to generate an item set of interest to the user, wherein the item set includes one or more items; monitoring, by the price radar module, a discount information of the item in the item set; and calculating, by the price monitoring module, an actual price of the item based on the discount information of the item monitored by the price radar module, maintaining a price change record of the item in the item set, and determining whether to push a prompt information to the user or not according to the calculated actual price of the item and the price change record.

Another aspect of the present disclosure provides a computer system, including: one or more processors; a memory for storing one or more programs, wherein the one or more programs, when executed by the one or more processors, cause the one or more processors to implement the method described above.

Another aspect of the present disclosure provides a computer-readable storage medium having executable instructions stored thereon, wherein the instructions, when executed by a processor, cause the processor to implement the method described above.

Another aspect of the present disclosure provides a computer program containing computer executable instructions, wherein the instructions, when executed, are allowed to implement the method described above.

According to the embodiments of the present disclosure, the system of recommending the item may be implemented to expand based on the content input by the user to generate the item set of interest to the user; monitor the discount information of the item in the item set by the price radar module; calculate the actual price of the item by the price monitoring module based on the discount information of the item monitored by the price radar module, maintain the price change record of the item in the item set, and determine whether to push the prompt information to the user or not according to the calculated actual price of the item and the price change record. Since the system of recommending the item may automatically expand the item of interest to the user and monitor the item obtained by expanding, the user does not need to manually add most items in the category of interest to favorites or manually monitor the discount information even if the current items belong to a large number of categories and have various prices and a variety of promotion types and coupons are provided with complicated rules, which at least partially overcomes the technical problem in the related art that the user needs to manually add most items in the category of interest to favorites, and thus achieves the technical effect of monitoring a real-time price change of the item of concern and the expanded item for the consumer and notifying of the most favorable price, so as to help the consumer to purchase the item at a favorable price in a convenient way.

BRIEF DESCRIPTION OF THE DRAWINGS

The above and other objectives, features and advantages of the present disclosure will be more apparent through the following description of embodiments of the present disclosure with reference to the accompanying drawings, in which:

FIG. 1 schematically shows an exemplary system architecture to which a system of recommending an item and a method of recommending an item may be applied according to the embodiments of the present disclosure.

FIG. 2 schematically shows a block diagram of a system of recommending an item according to the embodiments of the present disclosure.

FIG. 3 schematically shows a flowchart of a method of recommending an item by a system of recommending an item according to the embodiments of the present disclosure.

FIG. 4 schematically shows a block diagram of a brand similarity calculation module according to the embodiments of the present disclosure.

FIG. 5 schematically shows a schematic diagram of a brand graph according to the embodiments of the present disclosure.

FIG. 6 schematically shows a block diagram of a category correlation calculation module according to the embodiments of the present disclosure.

FIG. 7 schematically shows a schematic diagram of a correlation-between-categories-in-one-purchase graph according to the embodiments of the present disclosure.

FIG. 8 schematically shows a block diagram of a computer system suitable for implementing the method of recommending the item according to the embodiments of the present disclosure.

DETAILED DESCRIPTION OF EMBODIMENTS

Embodiments of the present disclosure will be described below with reference to the accompanying drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.
The terms used herein are for the purpose of describing specific embodiments only and are not intended to limit the present disclosure. The terms "comprising", "including", and the like used herein indicate the presence of the feature, step, operation and/or part, but do not exclude the presence or addition of one or more other features, steps, operations or parts.
All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.
In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C). In a case of using the expression similar to "at least one of A, B or C", it should be explained according to the meaning of the expression generally understood by those skilled in the art (for example, "a system including at least one of A, B or C" should include but not be limited to a system including only A, a system including only B, a system including only C, a system including A and B, a system including A and C, a system including B and C, and/or a system including A, B and C).

In a related art, a retail enterprise needs an automatic intelligent technology to help a consumer monitor a real-time price change of an item of concern (e.g., Haier refrigerator), a mined similar item to the item of concern (e.g., Haier freezer), a substitute of the item of concern (e.g., Samsung refrigerator) and a related item (frozen food). Once the price of the item is favorable enough, the consumer may be notified immediately, so as to help the consumer to purchase the item at the most favorable price conveniently.

An implementation of this technology is of great significance to give real care to consumers, improve user experience and protect consumers' rights and interests, while increasing revenue of retail enterprises and achieving real refined operations.

However, at present, retail enterprises do not have available technology to meet such a business requirement, and the existing technology generally relies on a manual setting. A specific technical difficulty may include that there is a need to build an item correlation mechanism for a large number of items so as to help the consumer purchase a favorite item or most-related item at the most favorable price. A large number of items may have a large amount of price changes, and it is difficult to verify the favorable price of the item. Therefore, there is a need to develop a new set of automated intelligent process.

On this basis, the embodiments of the present disclosure provide a system of recommending an item, including: an item expansion module used to expand a content input by a user in response to the content input by the user, so as to generate an item set of interest to the user that includes one or more items; a price radar module used to monitor a discount information of the item in the item set; and a price monitoring module used to calculate an actual price of the item based on the discount information of the item monitored by the price radar module, maintain a price change record of the item in the item set, and determine whether to push a prompt information to the user or not according to the calculated actual price of the item and the price change record.

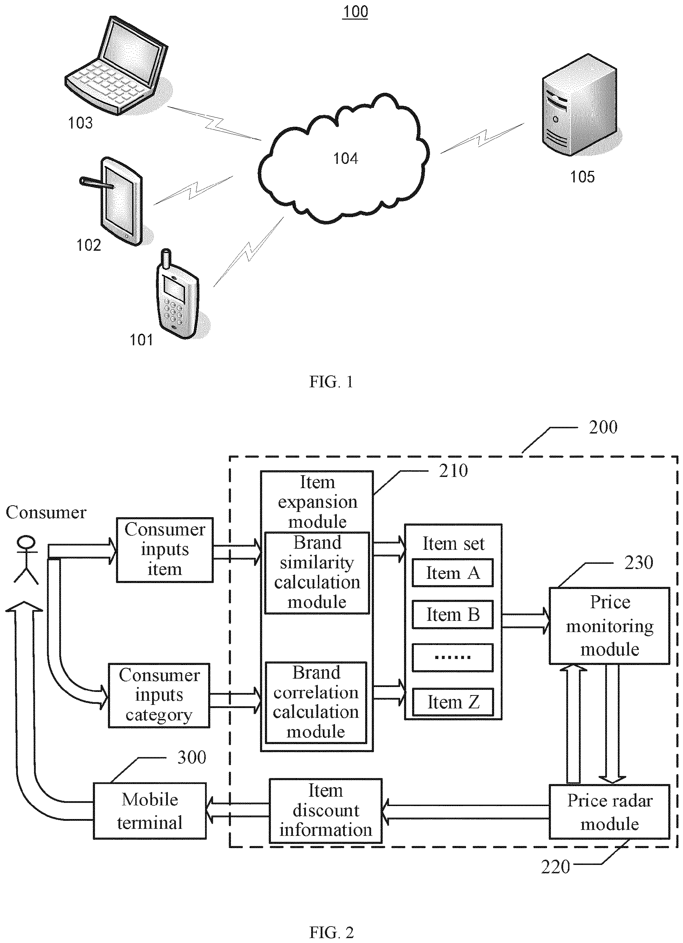

FIG. 1 schematically shows an exemplary system architecture to which a system of recommending an item and a method of recommending an item may be applied according to the embodiments of the present disclosure. It should be noted that FIG. 1 is only an example of a system architecture to which the embodiments of the present disclosure may be applied, so as to help those skilled in the art to understand the technical content of the present disclosure. It does not mean that the embodiments of the present disclosure may not be applied to other devices, systems, environments or scenarios.

As shown in FIG. 1, a system architecture 100 according to the embodiment may include terminal devices 101, 102, 103, a network 104, and a server 105. The network 104 is used to provide a medium for a communication link between the terminal devices 101, 102, 103 and the server 105. The network 104 may include various connection types, such as wired or wireless communication links, etc.

A user may use the terminal devices 101, 102, 103 to interact with the server 105 through the network 104 so as to receive or transmit a message, etc. Various communication client applications, such as shopping applications, web browser applications, search applications, instant messaging tools, email clients and/or social platform software, etc. (for example only) may be installed on the terminal devices 101, 102, 103.

The terminal devices 101, 102, 103 may be, for example, various electronic devices having a display screen and supporting web browsing, including but not limited to smart phones, tablet computers, laptop computers, desktop computers, and the like.

The server 105 may be a server that provides various services, such as a background management server that supports a website browsed by the user using the terminal devices 101, 102, 103 (for example only). The background management server may analyze and process received data such as a user request, and feedback a result of processing (for example, website, information or data acquired or generated according to the user request) to the terminal device.

It should be noted that the method of recommending the item provided by the embodiments of the present disclosure may generally be performed by the server 105. Accordingly, the system of recommending the item provided by the embodiments of the present disclosure may generally be arranged in the server 105. The method of recommending the item provided by the embodiments of the present disclosure may also be performed by a server or server cluster different from the server 105 and capable of communicating with the terminal devices 101, 102, 103 and/or the server 105. Accordingly, the system of recommending the item provided by the embodiments of the present disclosure may also be arranged in the server or server cluster different from the server 105 and capable of communicating with the terminal devices 101, 102, 103 and/or the server 105. Alternatively, the method of recommending the item provided by the embodiments of the present disclosure may be performed by the terminal device 101, 102 or 103, or may be performed by other terminal device different from the terminal device 101, 102 or 103. Accordingly, the system of recommending the item provided by the embodiments of the present disclosure may be arranged in the terminal device 101, 102 or 103, or may be arranged in other terminal device different from the terminal device 101, 102 or 103.

It should be understood that the number of terminal device, network and server in FIG. 1 is only illustrative. The system architecture may include any number of terminal device, network and server according to implementation needs.

FIG. 2 schematically shows a block diagram of a system of recommending an item according to the embodiments of the present disclosure.

As shown in FIG. 2, a system 200 of recommending an item includes an item expansion module 210, a price radar module 220 and a price monitoring module 230.

The item expansion module 210 is used to expand a content input by a user in response to the content input by the user, so as to generate an item set of interest to the user that includes one or more items. For example, the item set may include item A, item B, and item Z.

The price radar module 220 is used to monitor a discount information of the item in the item set.

The price monitoring module 230 is used to calculate an actual price of the item based on the discount information of the item monitored by the price radar module 220, maintain a price change record of the item in the item set, and determine whether to push a prompt information to the user or not according to the calculated actual price of the item and the price change record.

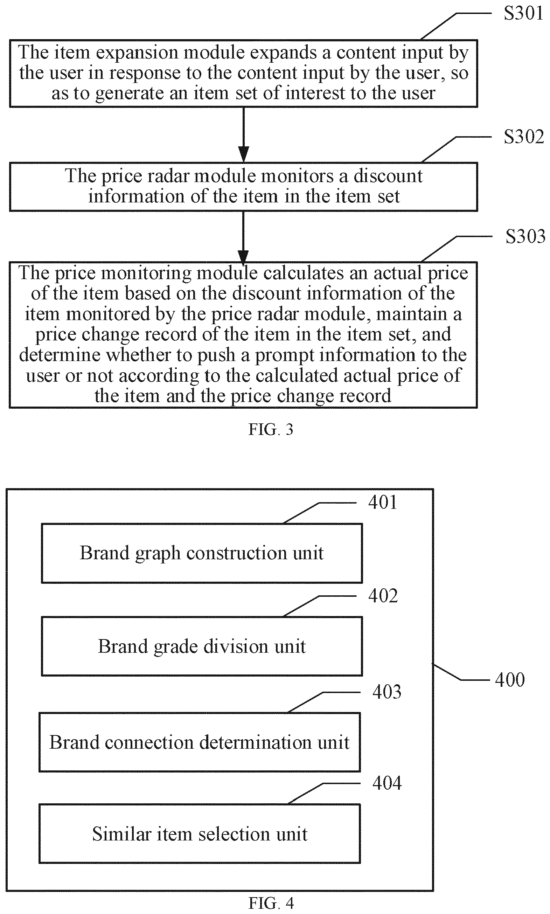

The system shown in FIG. 2 will be further described below in conjunction with specific embodiments by referring to FIG. 3.

FIG. 3 schematically shows a flowchart of a method of recommending an item by a system of recommending an item according to the embodiments of the present disclosure.

As shown in FIG. 3, the method includes operations S301~S303.

In operation S301, the item expansion module expands a content input by the user in response to the content input by the user, so as to generate an item set of interest to the user. The item set includes one or more items.

According to the embodiments of the present disclosure, the user may input a favorite item and/or a favorite category. For example, the user may input a favorite item and a favorite category. The category may be divided according to a current dividing method of mainstream merchants. The item expansion module may expand the content input by the user, so as to generate the item set of interest to the user. For example, if the user inputs "Lancôme lotion", the item may be expanded to, for example, "L'Oreal lotion", so as to mine a set of items similar to "Lancôme lotion". It should be noted that the content input by the user is not limited to an item and a category, and may be other content such as a description of item. For example, if the user inputs bathing supplies, the item expansion module may expand to obtain "Safeguard", "Rejoice", "Dabao", etc.

In operation S302, the price radar module monitors a discount information of the item in the item set.

According to the embodiments of the present disclosure, the price radar module may monitor whether a low price of the item occurs, or whether a larger promotion and coupon occurs, and the price radar module may timely transmit the discount information of the item to a mobile terminal 300 and the price monitoring module.

In operation S303, the price monitoring module calculates an actual price of the item based on the discount information of the item monitored by the price radar module, maintain a price change record of the item in the item set, and determine whether to push a prompt information to the user or not according to the calculated actual price of the item and the price change record.

According to the embodiments of the present disclosure, for example, if it is found that the actual price of the item is a lowest price in history after comparing the calculated actual price of the item with the price change record, the price monitoring module may push a prompt information to the mobile terminal 300 of the user, and a price information of the item may be displayed on the mobile terminal 300 to prompt the user that the current price of the item is appropriate for purchase.

According to the embodiments of the present disclosure, the price monitoring module may calculate a real-time price of the item in the item set by enumerating the promotional coupons for the item, and return a real-time minimum price of the item.

According to the embodiment of the present disclosure, in determining whether to push a prompt information to the user or not according to the calculated actual price of the item and the price change record, the price monitoring module may compare the calculated actual price of the item with a historical price in the price change record, and push the prompt information to the user or inform the price radar module to push the discount information to the user when the calculated actual price of the item is less than the historical price in the price change record.

According to the embodiments of the present disclosure, for the item in the item set of interest to the user, the price monitoring module may also periodically call the price radar module to calculate the price of the item and store the price. The price monitoring module may maintain the change record of the historical price of the item, and define a verification period for the historical price. If the real-time price of the item is less than a lowest historical price (or less than the price when the consumer concerns the item), the discount information of the item may be pushed to the mobile terminal. Through the embodiments of the present disclosure, it may be ensured that the consumer may receive a notification of a favorable price for the item of interest, so as to help the consumer purchase the item at the favorable price and improve a consumption experience.

According to the embodiments of the present disclosure, it is possible to monitor the real-time price change of the item of concern and the item expanded from the item of concern, and notify of the most favorable price, so as to help the consumer purchase the item at the most favorable price in the most convenient way.

Different from other promotional offers based on price discount and consumers' personalization, the present disclosure is aimed at the item concerned by the consumer and tracks the item over a period of time, so as to promote sales in a retail industry using the discount formed by a price fluctuation of the item over time, which is a breakthrough in marketing technology.

According to the embodiments of the present disclosure, the system of recommending the item may be implemented to expand based on the content input by the user to generate the item set of interest to the user; monitor the discount information of the item in the item set by the price radar module; calculate the actual price of the item by the price monitoring module based on the discount information of the item monitored by the price radar module, maintain the price change record of the item in the item set, and determine whether to push the prompt information to the user or not according to the calculated actual price of the item and the price change record. Since the system of recommending the item may automatically expand the item of interest to the user and monitor the item obtained by expanding, the user does not need to manually add most items in the category of interest to favorites or manually monitor the discount information even if the current items belong to a large number of categories and have various prices and a variety of promotion types and coupons are provided with complicated rules, which at least partially overcomes the technical problem in the related art that the user needs to manually add most items in the category of interest to favorites, and thus achieves the technical effect of monitoring a real-time price change of the item of concern and the expanded item for the consumer and notifying of the most favorable price, so as to help the consumer to purchase the item at a favorable price in a convenient way.

According to the embodiments of the present disclosure, the item expansion module may include a brand similarity calculation module and a category correlation calculation module.

The brand similarity calculation module is used to expand an item of concern input by the user in response to the item of concern input by the user.

According to the embodiments of the present disclosure, for example, if the item of concern input by the user is "Dabao moisturizer", it may be expanded to obtain "Dabao facial cleanser" and so on.

The category correlation calculation module is used to analyze a category input by the user, mine a potential transaction scenario where the category may exist, and determine an item that may be involved in the potential transaction scenario, in response to the category input by the user.

According to the embodiments of the present disclosure, for example, if the category input by the user is diapers, the category may be analyzed to determine that the potential transaction scenario may be baby products, and the item that may be involved includes milk bottles and milk powder.

According to the embodiments of the present disclosure, the item obtained after expanding by the brand similarity calculation module and the item determined by the category correlation calculation module constitute the item set.

FIG. 4 schematically shows a block diagram of a brand similarity calculation module according to the embodiments of the present disclosure.

According to the embodiments of the present disclosure, the brand similarity calculation module 400 may search for a set of similar items to the input item by analyzing a brand of the input item. The brand similarity calculation module 400 may further analyze the item price of each brand and a multi-level classification covered by the item, and divide the brand information, by using fuzzy mathematics, into at least three grades including a high grade, a medium grade and a low grade, which may correspond to three brand knowledge graphs including a high grade brand knowledge graph, a medium grade brand knowledge graph and a low grade brand knowledge graph. The system of recommending the item may use the graph to query the correlated item set.

As shown in FIG. 4, the brand similarity calculation module 400 may include a brand graph construction unit 401, a brand grade division unit 402, a brand connection determination unit 403, and a similar item selection unit 404.

According to the embodiments of the present disclosure, the brand graph construction unit 401 is used to: calculate a brand distance between any two brands, which is defined as a ratio of a number of one or more same categories covered by the two brands to a total number of categories covered by the two brands; compare the brand distance between the two brands with a first preset threshold, and determine two brands with the brand distance greater than the first preset threshold as correlated brands; build a correlation between the correlated brands in a brand graph; and visually displaying the brand graph .

According to the embodiments of the present disclosure, taking a common three-level classification as an example, the brand distance between any two brands may be calculated by Equation (1).

$$\text{brand}\_distance(brand\ x, brand\ y) =$$

$$\frac{the\ number\ of\ one\ or\ more\ same\ categories\ under\ three-level\ classification\ covered\ by\ brand\ x\ and\ brand\ y}{the\ total\ number\ of\ categories\ under\ three-level\ classification\ covered\ by\ brand\ x\ and\ brand\ y}$$

Equation (1)

When the distance between two brands exceeds a certain threshold, it may be considered that the two brands are correlated. The first preset threshold may be determined according to the number of items to be obtained by expanding. For example, when a large number of items need to be obtained by expanding, the first preset threshold may be set to be relatively small; while when a small number of items need to be obtained by expanding, the first preset threshold may be set to be relatively large.

According to the embodiments of the present disclosure, the brand graph is used to represent a relationship between brands. A vertex on the brand graph may represent a brand, and an edge may represent a correlation between two brands.

According to the embodiments of the present disclosure, since the brand of item may be classified into the high grade, the medium grade or the low grade according to the price, the present disclosure may construct a brand graph for high grade, medium grade and low grade in order to construct a hierarchical brand graph and obtain more similar items.

According to the embodiments of the present disclosure, the present disclosure uses fuzzy mathematics to divide brands into high grade, medium grade, and low grade. Specifically, an average price overflow ratio of the brand is divided into a grade using fuzzy mathematics.

According to the embodiments of the present disclosure, the brand grade division unit 402 is used to: calculate the average price overflow ratio of each brand by Equation (2);

$$average\ price\ overflow\ ratio = \frac{average\ price\ of\ item\ in\ category\ 1\ of\ the\ brand}{average\ price\ of\ item\ in\ category\ 1\ of\ all\ brands} +$$

$$\cdots + \frac{average\ price\ of\ item\ in\ category\ n\ of\ the\ brand}{average\ price\ of\ item\ in\ category\ n\ of\ all\ brands} \quad \text{Equation (2)}$$

determine a probability of the average price overflow ratio of each brand belonging to each grade through fuzzy mathematics; calculate a final probability of each brand according to the probability of the average price overflow ratio of the brand belonging to each grade and a weight assigned to each grade; and determine a grade of each brand according to the final probability of the brand.

Assuming that for a given brand x, an average value of price overflow ratios of all brands in the same category as the brand x under the three-level classification is m, a standard deviation is d, and w represents a value of the average price overflow ratio overFlowRatio(x), then a grade of the brand x may be determined by fuzzy mathematical equations (3) to (5).

$$P\_low(x) = \begin{cases} 1, & \text{if } w \leq m - \frac{3d}{2} \\ -\frac{4}{2m-d}w + 2, & \text{if } m - \frac{3d}{2} < w \leq m - \frac{d}{2} \\ 0, & \text{if } w > m - \frac{d}{2} \end{cases} \quad \text{Equation (3)}$$

$$P\_middle(x) = \begin{cases} 0, & \text{if } w \leq m - \frac{3d}{2} \\ \frac{4}{2m-d}w - 1, & \text{if } m - \frac{3d}{2} < w \leq m - \frac{d}{2} \\ 1, & \text{if } m - \frac{d}{2} < w \leq m + \frac{d}{2} \\ -\frac{1}{d}w + 1.5 + \frac{m}{d}, & \text{if } m + \frac{d}{2} < w \leq m + \frac{3d}{2} \\ 0, & \text{if } w \geq m + \frac{3d}{2} \end{cases} \quad \text{Equation (4)}$$

$$P\_high(x) = \begin{cases} 0, & \text{if } w \leq m + \frac{d}{2} \\ \frac{1}{d}w - 0.5 - \frac{m}{d}, & \text{if } m + \frac{d}{2} \leq w \leq m + \frac{3d}{2} \\ 1, & \text{if } w \geq m + \frac{3d}{2} \end{cases} \quad \text{Equation (5)}$$

Through the fuzzy mathematical equations (3) to (5) defined above, a probability of a brand belonging to the high grade, the medium grade and the low grade may be calculated, then combined with a weight, a final probability Pdefuzzification of the brand may be obtained.

$$P\_defuzzification(x) = Weihgt\_low * P\_low(x) + Weihgt\_middle * P\_middle(x) +$$

$$Weihgt\_high * P\_high(x) \quad \text{Equation (6)}$$

Finally, the brand grade may be divided by Equation (7).

$$level(x) = \begin{cases} \text{low grade}, & P\_defuzzification(x) \leq Weihgt\_low \; ; \\ \text{medium grade}, & Weihgt\_low < P\_defuzzification(x) < Weihgt\_middle \\ \text{high grade}, & Weihgt\_middle < P\_defuzzification(x) \; ; \end{cases}$$

$$\text{Equation (7)}$$

Therefore, it may be determined the given brand x belongs to which grade of knowledge graph according to the finally calculated level(x).

The embodiments of the present disclosure innovatively construct the brand knowledge graph, specifically build the brand graph for different grades, and innovatively use graph theory and fuzzy mathematics to help the consumer locate a possible favorite item and form an upstream sale. At the same time, the present disclosure may further construct a category knowledge graph, so as to help the consumer find the item that meets the consumption scenario for the consumer and improve the consumption experience.

The present disclosure may be implemented to divide the grade of brand and determine whether there is a connection between brands or not through fuzzy mathematics based on the price overflow ratio of brands and the similarity distance between brands. Graph theory and fuzzy mathematics are innovatively introduced into the system of recommending the item to mine the similar item through graph processing technology and intelligent optimization algorithm, so as to mine the potential scenario of the item and achieve an intelligent automatic selection of items.

According to the embodiments of the present disclosure, the brand graph construction unit 401 is further used to construct, after the grade of each brand is determined by the brand grade division unit, a brand graph for different grades of brands according to the grade of each brand in the brand graph.

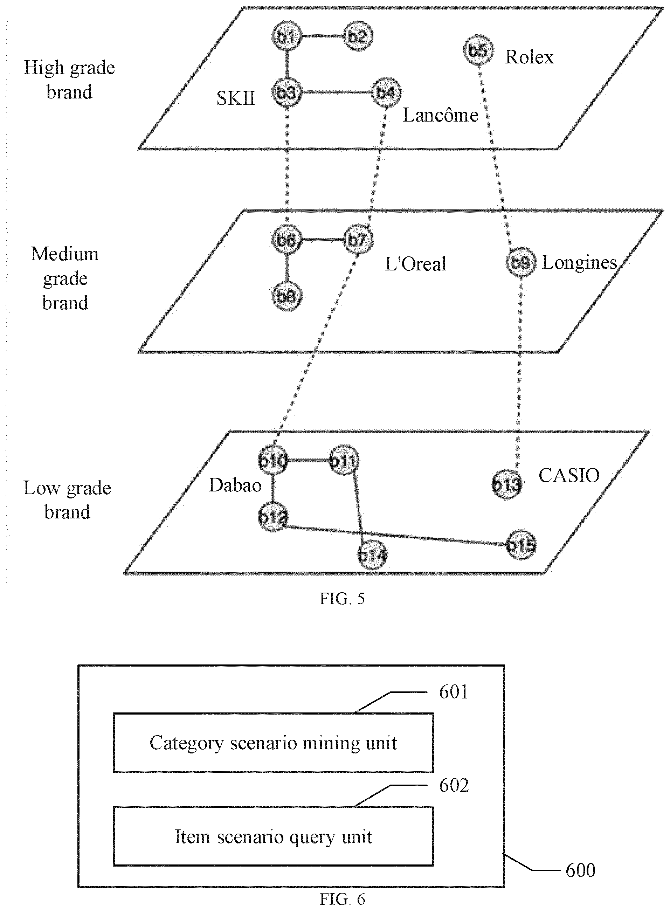

FIG. 5 schematically shows a schematic diagram of the brand graph according to the embodiments of the present disclosure.

According to the embodiments of the present disclosure, the brand of item may be divided into three grades including the high grade, the medium grade and the low grade according to the price. Therefore, as shown in FIG. 5, an overall brand relationship of items may be expressed by three brand knowledge graphs including the high grade brand knowledge graph, the medium grade brand knowledge graph and the low grade brand knowledge graph. In the brand knowledge graph for the same grade, such as the high grade brand graph, brand Lancôme and brand Rolex are not correlated, because the two brands have no overlap in the category of items. In the brand knowledge graph for different grades, brands may be connected, such as Lancôme and L'Oreal, because the two brands have a large overlap in the category of items. All brands may be constructed into three knowledge graphs as shown in FIG. 5, where each circle represents a brand, a solid line represents a correlation between brands in the same grade, and a dotted line represents a connection between brands in different grades.

According to the embodiments of the present disclosure, the brand similarity calculation module 400 further includes a brand connection determination unit 403, which is used to: multiply the final probabilities of any two brands to obtain a probability of the two brands being correlated; compare the probability of the two brands being correlated with a second preset threshold to determine whether the two brands are correlated or not; determine two brands with a probability of being correlated greater than or equal to the second preset threshold as correlated brands; and build a correlation between the correlated brands in the brand graph.

According to the embodiments of the present disclosure, any two brands may be brands in the same grade or brands in different grades. As shown in FIG. 5, the brand SKII and the brand Lancôme are correlated brands, and the correlation between the correlated brands may be represented by a connection line in the brand graph.

For arbitrary brand x and brand y, whether the two brands are correlated (connected) or not may be determined by Equation (8), marked as connectivity(x, y).

$$\text{connectivity}(x, y) \ = \ \begin{cases} 1 \ , & \text{if } \left(P_{\text{defuzzification}(x)} * P_{\text{defuzzification}(y)}\right) \geq h; \\ 0 \ , & \text{if } \left(P_{\text{defuzzification}(x)} * P_{\text{defuzzification}(y)}\right) < h. \end{cases} \qquad \text{Equation (8)}$$

where a threshold h is a set parameter. When connectivity(x, y)=1, it is considered that the two brands are connected to each other, that is, there exists an edge connecting x and y. Otherwise, it is considered that the two brands are not connected, that is, connectivity(x, y)=0. If the two brands are adjacent, a final weight of the edge connecting the two brands is calculated by Equation (9).

$$\text{edge}(x,y)=\text{connectivity}(x,y)* \text{brand\_distance}(x,y) \qquad \text{Equation (9)}$$

where brand_distance(x, y) is calculated by Equation (1).

According to the embodiments of the present disclosure, the similar item selection unit 404 is used to expand the content input by the user based on the brand graph, and expand the item from the brand correlated with the content input by the user.

According to the embodiments of the present disclosure, the aforementioned constructed brand graph may be used to expand the item. For an item A of interest input by the consumer, assuming that the item A has the brand x, the similar item may be mined by the following methods.

Method 1 is performed to query the brand x of the item A to obtain other correlated item in the same category under three-level classification.

Method 2 is performed to select, from a brand in the same grade as the brand x of the item A, an item with a correlated brand in the same category under three-level classification. For example, assuming that an item of interest input by the consumer has a medium grade brand, an item with a correlated brand (the correlated brand is obtained using Equation (8)) in the same category under three-level classification may be selected from the medium grade brand graph.

Method 3 is performed to select, from a brand graph for a grade higher than the grade x of the item A (for example, from the high grade brand graph), an item with a correlated brand in the same category under three-level classification, so as to guide a consumption upgrade of the user. For example, assuming that an item of interest input by the consumer has a medium grade brand, an item with a correlated brand (the correlated brand is obtained using Equation (6) and Equation (8)) in the same category under three-level classification may be selected from the high grade brand graph.

Finally, all items returned by the above three methods may be collected and output.

FIG. 6 schematically shows a block diagram of a category correlation calculation module according to the embodiments of the present disclosure.

The category correlation calculation module may search for a set of similar item based on the category under three-level classification (or four-level classification) of the item input by the user.

The category correlation calculation module may mine a potential purchase scenario of the current item, and then automatically select the item set by considering the user's historical purchase behavior such as adding to cart and browsing in this scenario, combined with corresponding promotions and coupons. The category correlation calculation module may perform a task by serially calling a category scenario mining unit and an item scenario query unit described below.

According to the embodiments of the present disclosure, as shown in FIG. 6, the category correlation calculation module 600 includes a category scenario mining unit 601 and an item scenario query unit 602.

The category scenario mining unit 601 is used to construct a correlation-between-categories-in-one-purchase graph by analyzing a historical order within a preset period of time, and mine one or more consumption scenarios according to the correlation-between-categories-in-one-purchase graph.

The consumer generally shops to solve a consumption scenario in life. Therefore, an order usually contains several different items. A common consumption scenario is formed in reality through thousands of consumer shopping behaviors. A consumption scenario may be represented by a combination of several different items. Since each item corresponds to an item category under three-level classification, a consumption scenario may be represented by a combination of several item categories under three-level classification. If a vertex in the graph represents an item category in three-level classification, and an edge in the graph indicates that two item categories under three-level classifications belong to the same consumption scenario, then the consumption scenario may be expressed by a figure.

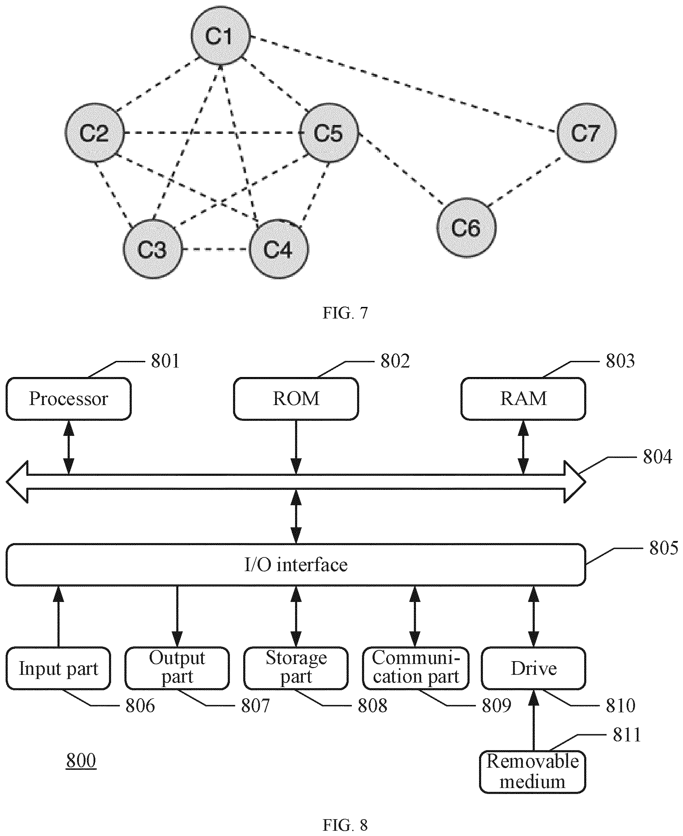

FIG. 7 schematically shows a schematic diagram of a correlation-between-categories-in-one-purchase graph according to the embodiments of the present disclosure.

In the correlation-between-categories-in-one-purchase graph (also known as a consumption scenario knowledge graph) shown in FIG. 7, vertices C1 to C7 represent different item categories under three-level classification. C1 to C5 represent a consumption scenario because the nodes C1, C2, C3, C4 and C5 form a complete sub-graph (in which any two vertices are connected by an edge). The complete sub-graph means that the five categories C1 to C5 are often purchased together, which means that these five categories form a shopping scenario. For example, baby bottles, milk powder and diapers may form a potential mother and baby shopping scenario. C6 and C7 represent a relatively independent and small consumption scenario.

The category scenario mining unit 601 may construct a correlation-between-categories-under-three-level-classification-in-one-purchase graph by analyzing a historical order within a certain period of time. The connection between categories under three-level classification represents a relationship between the categories in one purchase and the consumption scenario in the historical order.

Through constructing the correlation graph by analyzing the categories in one purchase in the historical order and through searching the complete sub-graph in the graph using an intelligent optimization algorithm, the potential shopping scenario may be mined.

The item scenario query unit 602 is used to query the correlation-between-categories-in-one-purchase graph according to the content input by the user, so as to obtain the category correlated with the content input by the user.

According to the embodiments of the present disclosure, mining the similar item to an item category M of interest input by the consumer through the correlation-between-categories-in-one-purchase graph constructed by the category scenario mining unit mainly includes steps of: querying the correlation-between-categories-in-one-purchase graph to obtain the item category correlated with the given category M, traversing each returned correlated item category to select a best-selling and well-received item in the correlated category, and finally outputting all items returned in the above two steps.

Through the embodiments of the present disclosure, it is possible to monitor the real-time price change of the item of concern and the item expanded from the item of concern, and notify the consumer to help the consumer purchase the item at the most favorable price in the most convenient way.

By innovatively constructing the brand knowledge graph (or category knowledge graph), the item concerned by the consumer may be expanded to the managed item set, so as to achieve a diversified and scenario-based recommendation of item. By continuously monitoring the item that the user may be interested in, a low price or an appropriate promotion may reach the user in time. For the generated scenario-oriented discount combination album, the price with the use of promotion and coupon may be automatically calculated, and the real-time discount information may be fed back to the consumer.

Any number of the modules, sub-modules, units and subunits according to the embodiments of the present disclosure, or at least part of the functions of any number of them may be implemented in one module. Any one or more of the modules, sub-modules, units and subunits according to the embodiments of the present disclosure may be split into multiple modules for implementation. Any one or more of the modules, sub-modules, units and subunits according to the embodiments of the present disclosure may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, one or more of the modules, sub-modules, units and subunits according to the embodiments of the present disclosure may be at least partially implemented as a computer program module that, when executed, may perform the corresponding functions.

For example, any plurality of the item expansion module 210, the price radar module 220 and the price monitoring module 230 may be integrated into one module/unit/subunit for implementation, or any one thereof may be split into a plurality of modules/units/subunits. Alternatively, at least part of functions of one or more of these modules/units/subunits may be combined with at least part of functions of other modules/units/subunits and implemented in one module/unit/subunit. According to the embodiments of the present disclosure, at least one of the item expansion module 210, the price radar module 220 and the price monitoring module 230 may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, at least one of the item expansion module 210, the price radar module 220 and the price monitoring module 230 may be at least partially implemented as a computer program module that, when executed, may perform the corresponding functions.

The present disclosure further provides a computer system, including: one or more processors; and a memory for storing one or more programs, the one or more programs, when executed by the one or more processors, cause the one or more processors to implement the method of recommending the item.

FIG. 8 schematically shows a block diagram of a computer system suitable for implementing the method described above according to the embodiments of the present disclosure. The computer system shown in FIG. 8 is merely an example, and should not bring any limitation to the function and scope of use of the embodiments of the present disclosure.

As shown in FIG. 8, a computer system 800 according to the embodiments of the present disclosure includes a processor 801 that may execute various appropriate actions and processing according to a program stored in a read only memory (ROM) 802 or a program loaded from a storage part 808 into a random access memory (RAM) 803. The processor 801 may, for example, include a general-purpose microprocessor (for example, CPU), an instruction set processor and/or a related chipset and/or a special-purpose microprocessor (for example, an application specific integrated circuit (ASIC)), and the like. The processor 801 may further include an on-board memory for a caching purpose. The processor 801 may include a single processing unit or a plurality of processing units for executing different actions of the method flow according to the embodiments of the present disclosure.

Various programs and data required for an operation of the system 800 are stored in the RAM 803. The processor 801, the ROM 402 and the RAM 803 are connected to each other through a bus 804. The processor 801 executes various operations of the method flow according to the embodiments of the present disclosure by executing the program in the ROM 802 and/or the RAM 803. It should be noted that the program may also be stored in one or more memories other than the ROM 402 and the RAM 803. The processor 801 may also execute various operations of the method flow according to the embodiments of the present disclosure by executing the program stored in the one or more memories.

According to the embodiments of the present disclosure, the system 800 may further include an input/output (I/O) interface 805 that is also connected to the bus 804. The system 800 may further include one or more of the following components connected to the I/O interface 805: an input part 806 including a keyboard, a mouse, etc.; an output part 807 including a cathode ray tube (CRT), a liquid crystal display (LCD), etc. and a speaker, etc.; a storage part 808 including a hard disk, etc.; and a communication part 809 including a network interface card such as a LAN card, a modem, and the like. The communication part 809 performs communication processing via a network such as the Internet. A drive 810 is also connected to the I/O interface 805 as required. A removable medium 811, such as a magnetic disk, an optical disk, a magneto-optical disk, a semiconductor memory, etc., is installed on the drive 810 as required, so that the computer program read therefrom is installed into the storage part 808 as needed.

The method flow according to the embodiments of the present disclosure may be implemented as a computer software program. For example, the embodiments of the present disclosure include a computer program product containing a computer program carried on a computer-readable storage medium. The computer program contains a program code for execution of the method shown in the flowchart. In such an embodiment, the computer program may be downloaded and installed from the network through the communication part 809, and/or installed from the removable medium 811. When the computer program is executed by the processor 801, the above-mentioned functions defined in the system of the embodiments of the present disclosure may be performed. According to the embodiments of the present disclosure, the above-described system, apparatus, device, module, unit, etc. may be implemented by a computer program module.

The present disclosure further provides a computer-readable storage medium, which may be included in the apparatus/device/system described in the above embodiments; or exist alone without being assembled into the apparatus/device/system. The above-mentioned computer-readable storage medium may carry one or more programs that when executed, implement the method according to the embodiments of the present disclosure.

According to the embodiments of the present disclosure, the computer-readable storage medium may be a non-transitory computer-readable storage medium that, for example, may include but is not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device.

For example, according to the embodiments of the present disclosure, the computer-readable storage medium may include the ROM 802 and/or the RAM 803 described above and/or one or more memories other than the ROM 802 and the RAM 803.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions. Those skilled in the art may understand that the various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

The embodiments of the present disclosure have been described above. However, these embodiments are for illustrative purposes only, and are not intended to limit the scope of the present disclosure. Although the embodiments have been described separately above, this does not mean that measures in the respective embodiments may not be used in combination advantageously. The scope of the present disclosure is defined by the appended claims and their equivalents. Without departing from the scope of the present disclosure, those skilled in the art may make various substitutions and modifications, and these substitutions and modifications should all fall within the scope of the present disclosure.

**Claims**

1. A system of recommending an item, comprising:

   an item expansion module configured to expand a content input by a user in response to the content input by the user, so as to generate an item set of interest to the user, wherein the item set comprises one or more items;
   a price radar module configured to monitor a discount information of the item in the item set; and
   a price monitoring module configured to calculate an actual price of the item based on the discount information of the item monitored by the price radar module, maintain a price change record of the item in the item set, and determine whether to push a prompt information to the user or not according to the calculated actual price of the item and the price change record.

2. The system of claim 1, wherein the item expansion module comprises:

   a brand similarity calculation module configured to expand an item of concern input by the user in response to the item of concern input by the user; and
   a category correlation calculation module configured to analyze a category input by the user, mine a potential transaction scenario for the category, and determine an item involved in the potential transaction scenario, in response to the category input by the user;
   wherein an item obtained after expanding by the brand similarity calculation module and the item determined by the category correlation calculation module form the item set.

3. The system of claim 2, wherein the brand similarity calculation module comprises a brand graph construction unit configured to:

   calculate a brand distance between any two brands, wherein the brand distance between the two brands is defined as a ratio of a number of one or more same categories covered by the two brands to a total number of categories covered by the two brands;
   compare the brand distance between the two brands with a first preset threshold, and determine two brands with a brand distance greater than the first preset threshold as correlated brands;
   build a correlation for the correlated brands in a brand graph; and
   visually display the brand graph.

4. The system of claim 2 or 3, wherein the brand similarity calculation module further comprises a brand grade division unit configured to:

calculate an average price overflow ratio of each brand by an equation of:

$$average\ price\ overflow\ ratio = \frac{average\ price\ of\ item\ in\ category\ 1\ of\ the\ brand}{average\ price\ of\ item\ in\ category\ 1\ of\ all\ brands} +$$

$$\cdots + \frac{average\ price\ of\ item\ in\ category\ n\ of\ the\ brand}{average\ price\ of\ item\ in\ category\ n\ of\ all\ brands},$$

determine a probability of the average price overflow ratio of the brand belonging to each grade through fuzzy mathematics;
calculate a final probability of the brand according to the probability of the average price overflow ratio of the brand belonging to each grade and a weight assigned to each grade; and
determine a grade for the brand according to the final probability of the brand.

5. The system of claim 4, wherein the brand graph construction unit is further configured to:
construct a brand graph for each grade of brand according to the grade of each brand after the grade of each brand is determined by the brand grade division unit.

6. The system of claim 5, wherein the brand similarity calculation module further comprises a brand connection determination unit configured to:

multiply the final probabilities of any two brands to calculate a probability of the two brands being correlated;
compare the probability of the two brands being correlated with a second preset threshold to determine whether the two brands are correlated or not;
determine two brands with a probability of being correlated greater than or equal to the second preset threshold as correlated brands; and
build a correlation for the correlated brands in the brand graph.

7. The system of any one of claims 3 to 6, wherein the brand similarity calculation module further comprises a similar item selection unit configured to:
expand the content input by the user based on the brand graph, so as to obtain an item with a brand correlated with the content input by the user.

8. The system of claim 2, wherein the category correlation calculation module comprises:

a category scenario mining unit configured to construct a correlation-between-categories-in-one-purchase graph by analyzing a historical order within a preset period of time, and mine one or more consumption scenarios according to the correlation-between-categories-in-one-purchase graph; and
an item scenario query unit configured to query a category correlated with the content input by the user from the correlation-between-categories-in-one-purchase graph according to the content input by the user.

9. The system of claim 1, wherein, in determining whether to push a prompt information to the user or not according to the calculated actual price of the item and the price change record, the price monitoring module is further configured to:

compare the calculated actual price of the item with a historical price in the price change record; and
push the prompt information to the user or notify the price radar module to push the discount information to the user, in response to the calculated actual price of the item being less than the historical price in the price change record.

10. A method of recommending an item by a system of recommending an item, wherein the system of recommending the item comprises an item expansion module, a price radar module and a price monitoring module, and the method comprises:

expanding, by the item expansion module, a content input by a user in response to the content input by the user, so as to generate an item set of interest to the user, wherein the item set comprises one or more items;

monitoring, by the price radar module, a discount information of the item in the item set; and

calculating, by the price monitoring module, an actual price of the item based on the discount information of the item monitored by the price radar module, maintaining a price change record of the item in the item set, and determining whether to push a prompt information to the user or not according to the calculated actual price of the item and the price change record.

11. A computer system, comprising:

one or more processors;
a memory for storing one or more programs, wherein the one or more programs, when executed by the one or more processors, cause the one or more processors to implement the method of claim 10.

12. A computer-readable storage medium having executable instructions stored thereon, wherein the instructions, when executed by a processor, cause the processor to implement the method of claim 10.

FIG. 1

FIG. 2

S301

The item expansion module expands a content input by the user in response to the content input by the user, so as to generate an item set of interest to the user

S302

The price radar module monitors a discount information of the item in the item set

S303

The price monitoring module calculates an actual price of the item based on the discount information of the item monitored by the price radar module, maintain a price change record of the item in the item set, and determine whether to push a prompt information to the user or not according to the calculated actual price of the item and the price change record

FIG. 3

401

Brand graph construction unit

402

Brand grade division unit

403

Brand connection determination unit

400

404

Similar item selection unit

FIG. 4

High grade
brand

SKII

b1 — b2

b5 Rolex

b3 — b4

Lancôme

Medium
grade
brand

b6 — b7

L'Oreal

b9 Longines

b8

Low grade
brand

Dabao

b10 — b11

b13 CASIO

b12

b14

b15

FIG. 5

Category scenario mining unit — 601

Item scenario query unit — 602

600

FIG. 6

FIG. 7

FIG. 8

<div align="center"><b>INTERNATIONAL SEARCH REPORT</b></div>

| International application No. |
| --- |
| **PCT/CN2021/077669** |

| | |
| --- | --- |
| **A.** | **CLASSIFICATION OF SUBJECT MATTER** |
| | G06Q 30/06(2012.01)i |

According to International Patent Classification (IPC) or to both national classification and IPC

| | |
| --- | --- |
| **B.** | **FIELDS SEARCHED** |

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 商品, 物品, 推荐, 推送, 提示, 优惠, 价格, 价钱, 扩展, 集合, 组合, commodity, goods, articles, commend, groom, push, prompt, cue, advantage, preference, price, value, cost, enlarge, expand, gather, combination, assembled

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 108335159 A (GUANGZHOU DONG JING COMPUTER SCIENCE & TECHNOLOGY COMPANY) 27 July 2018 (2018-07-27) claims 1-10, description, paragraphs [0004]-[0015], [0027]-[0070] | 1-12 |
| A | CN 110009459 A (JIANGSU YIHUIJU SOFTWARE TECHNOLOGY CO., LTD.) 12 July 2019 (2019-07-12) entire document | 1-12 |
| A | CN 110163705 A (BEIJING JINGDONG SHANGKE INFORMATION TECHNOLOGY CO., LTD. et al.) 23 August 2019 (2019-08-23) entire document | 1-12 |
| A | CN 107341694 A (XIAMEN QUPIN NETWORK TECHNOLOGY CO., LTD.) 10 November 2017 (2017-11-10) entire document | 1-12 |
| A | US 8719110 B1 (INTUIT INC.) 06 May 2014 (2014-05-06) entire document | 1-12 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 May 2021** | **21 May 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/077669**

| Patent document cited in search report | | | Publication date (day/month/year) | Patent family member(s) | Publication date (day/month/year) |
|---|---|---|---|---|---|
| CN | 108335159 | A | 27 July 2018 | None | |
| CN | 110009459 | A | 12 July 2019 | None | |
| CN | 110163705 | A | 23 August 2019 | None | |
| CN | 107341694 | A | 10 November 2017 | None | |
| US | 8719110 | B1 | 06 May 2014 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010137487